# EUROPÄISCHE PATENTANMELDUNG

(11) **EP 2 620 831 A2**
(43) Veröffentlichungstag der Anmeldung: **31.07.2013**
(21) Anmeldenummer: 12189179.0
(22) Anmeldetag: 19.10.2012
(51) Int. Cl.: G05G 1/12, F24C 7/08

(54) **Bedienelement für ein Ventil, Ventil, Kombination von Bedienelement und Ventil sowie Haushaltsgerät**

(30) Priorität: 26.10.2011 ES 201131727
(71) Anmelder: BSH Bosch und Siemens Hausgeräte GmbH, 81739 München (DE)
(72) Erfinder: Aguado Muñoz, Ricardo, 48013 Bilbao (ES); Aguado Muñoz, Sergio, 48013 Bilbao (ES)

(57) **Zusammenfassung**

Es ist ein Bedienelement (10) für ein Ventil (20) eines Haushaltsgeräts (1), ein Ventil (20), eine Kombination aus Bedienelement (10) und Ventil (20), und ein Haushaltsgerät (1) bereitgestellt. Das Bedienelement (10) hat eine Greiffläche (11) zum Greifen des Bedienelements (10) durch einen Benutzer und eine Kopplungseinrichtung (13) zur lösbaren Kopplung des Bedienelements (10) mit einer Ventilwelle (21) des Ventils (20), wobei die Kopplungseinrichtung (13) ein Schnappelement (14) aufweist, welches an ein entsprechendes Element (23) der Ventilwelle (21) angepasst ist, um mit ihm einen Schnappverschluss zu bilden..

## Beschreibung

Die Erfindung betrifft ein Bedienelement für ein Ventil, ein Ventil, eine Kombination aus Bedienelement und Ventil, und ein Haushaltsgerät. Insbesondere betrifft die Erfindung ein Bedienelement, welches mit einem Ventil eines Haushaltgeräts, wie beispielsweise ein Gasherd, eine Waschmaschine, eine Spülmaschine, ein Kochfeld usw., koppelbar ist.

Bedienelemente für Ventile von Haushaltgeräten dienen beispielsweise zum Einschalten/Ausschalten des Haushaltsgeräts oder zum Auswählen bestimmter Programme des Haushaltsgeräts. Die Bedienelemente sind daher derart an dem Haushaltsgerät angebracht, dass ein Benutzer die Bedienelemente mit der Hand bedienen kann.

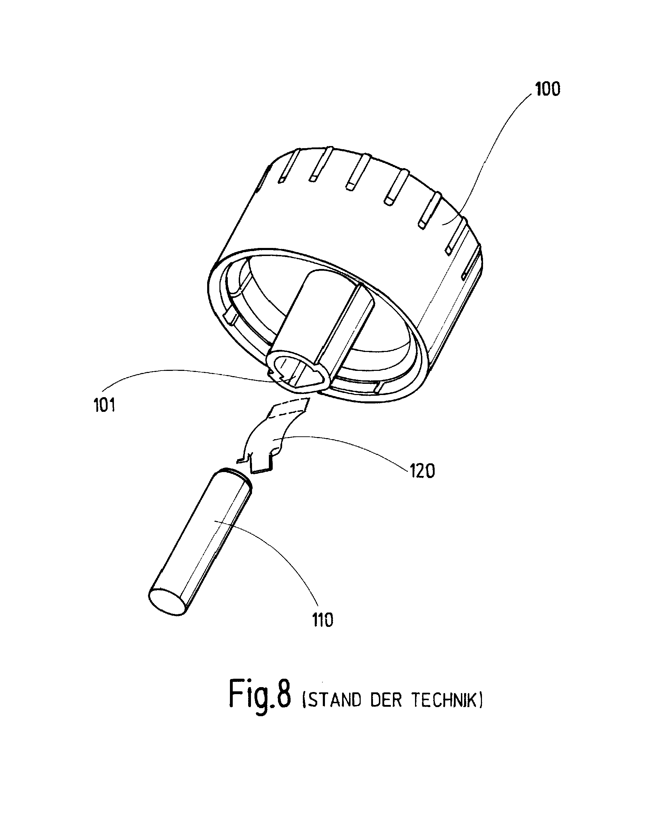

Ein konventionelles Bedienelement für ein Ventil ist an einer Welle des Ventils mit Hilfe einer Feder lösbar befestigt. Die Feder kann entweder innerhalb oder außerhalb eines Stutzens des Bedienelements angeordnet sein. Figur 8 zeigt ein Beispiel für ein solches konventionelles Bedienelement. Das Bedienelement 100 hat einen Stutzen 101, der auf einer Welle 110 mit Hilfe einer Feder 120 montierbar ist. Auf diese Weise können die Anforderungen erfüllt werden, die an ein Bedienelement gemäß den geltenden Sicherheitsvorschriften gestellt sind. Zudem ist das Bedienelement auswechselbar.

Die Montage eines solchen Systems aus Bedienelement und Ventil ist jedoch aufgrund von drei miteinander zu verbindenden Teilen relativ aufwändig.

Die Aufgabe der Erfindung besteht darin, ein verbessertes Bedienelement für ein Ventil, ein Ventil, eine Kombination aus Bedienelement und Ventil, und ein Haushaltsgerät bereitzustellen, bei welchen insbesondere die Montage von Bedienelement am Ventil vereinfacht ist und die Bedieneigenschaften des Bedienelements am Ventil verbessert sind.

Die Aufgabe der Erfindung ist durch ein Bedienelement für ein Ventil eines Haushaltsgeräts, mit den Merkmalen des Patentanspruchs 1 gelöst. Das Bedienelement hat eine Greiffläche zum Greifen des Bedienelements durch einen Benutzer und eine Kopplungseinrichtung zur lösbaren Kopplung des Bedienelements mit einer Ventilwelle des Ventils, wobei die Kopplungseinrichtung ein Schnappelement aufweist, welches an ein entsprechendes Element der Ventilwelle angepasst ist, um mit ihm einen Schnappverschluss zu bilden.

Das beschriebene Bedienelement kann sehr einfach und damit zeitsparender an der Ventilwelle montiert und wieder von ihr demontiert werden. Es sind anstelle von drei Teilen nur zwei Teile miteinander zu verbinden, nämlich die Kopplungseinrichtung des Bedienelements mit der Ventilwelle. Bei der Montage ist auch weniger Kraft aufzuwenden als herkömmlich. Zudem ergibt sich eine Kostenersparnis, da keine Feder mehr erforderlich ist.

Es ist möglich, dass das Schnappelement ein Vorsprung zum Eingriff in eine Vertiefung der Ventilwelle ist. Der damit gebildete Schnappverschluss stellt eine bessere Befestigung des Bedienelements an der Ventilwelle bereit als bei einer herkömmlichen Befestigung eines Bedienelements an einer Ventilwelle. Darüber hinaus hat der Schnappverschluss verbesserte Eigenschaften in Bezug auf das Kraftdrehmoment am Bedienelement.

Die Greiffläche kann ein zylindrischer Körper sein, der an einem seiner Enden geschlossen ist, wobei die Kopplungseinrichtung entlang der Zylinderachse des zylindrischen Körpers angeordnet ist.

Vorzugsweise ist die Kopplungseinrichtung ein Hohlkörper mit einem flachen Abschnitt, welcher einem flachen Abschnitt der Ventilwelle zugewandt ist, wenn die Kopplungseinrichtung mit der Ventilwelle lösbar gekoppelt ist, wobei das Schnappelement an einer dem flachen Abschnitt der Kopplungseinrichtung gegenüberliegenden Seite des Hohlkörpers angeordnet ist.

Bei einer solchen Konstruktion ist nur eine Kraft von weniger als 100 N aufzubringen, wenn das Bedienelement an einer Ventilwelle zu montieren ist, da das Ende der Ventilwelle angefast ist, also den flachen Abschnitt aufweist. Dadurch ist der Zusammenbau von Bedienelement und Ventil sehr einfach. Darüber hinaus ist jedoch die Abzugskraft des Bedienelements von der Ventilwelle höher als 100 N, so dass die relevanten Sicherheitsnormen eingehalten werden. Zudem ist der Widerstand des aufzuwendenden Drehmoments zum Drehen des Bedienelements durch den Kontakt zwischen den beiden flachen Abschnitten des Bedienelements und der Ventilwelle sichergestellt.

Es ist von Vorteil, wenn das Schnappelement eine bogenförmige Fläche hat, die an der Ventilwelle anliegt, wenn die Kopplungseinrichtung mit der Ventilwelle lösbar gekoppelt ist. Dadurch kann ein besonders sicherer Schnappverschluss hergestellt werden.

Die zuvor genannte Aufgabe der Erfindung wird zudem durch ein Ventil für ein Haushaltsgerät mit den Merkmalen des Patentanspruchs 6 gelöst. Das Ventil hat eine Ventilwelle zum Öffnen und/oder Schließen des Ventils, die mit einer Kopplungseinrichtung eines Bedienelements lösbar koppelbar ist, das eine Greiffläche zum Greifen des Bedienelements durch einen Benutzer aufweist, wobei die Ventilwelle ein Element aufweist, welches an ein Schnappelement der Kopplungseinrichtung des Bedienelements angepasst ist, um mit ihm einen Schnappverschluss zu bilden.

Auf diese Weise ist die Ventilwelle optimal an das zuvor beschriebene Bedienelement angepasst, so dass sich die zuvor genannten Vorteile ergeben.

Vorzugsweise ist das Element eine Vertiefung in der Ventilwelle, in die das Schnappelement des Bedienelements eingreifen kann. Hierbei kann die Vertiefung eine um den Umfang der Ventilwelle umlaufende Rille sein. Die Ventilwelle ist somit sehr einfach und kostensparend an das Schnappelement des Bedienelements für einen sicheren Schnappverschluss anpassbar.

Ferner ist eine Kombination aus dem zuvor beschriebenen Bedienelement und dem zuvor beschriebenen Ventil vorgeschlagen, bei welcher das Schnappelement des Bedienelements und das entsprechende Element des Ventils einen Schnappverschluss bilden.

Darüber hinaus ist ein Haushaltsgerät mit dem zuvor beschriebenen Bedienelement und dem zuvor beschriebenen Ventil vorgeschlagen, wobei das Bedienelement derart mit dem Ventil verbunden ist und an dem Haushaltgerät angeordnet ist, dass ein Benutzer das Bedienelement zum Ein/Ausschalten des Haushaltsgeräts und/oder zum Auswählen eines Programms des Haushaltsgeräts bedienen kann.

Das Haushaltgerät kann beispielsweise ein Gasherd, eine Waschmaschine, eine Spülmaschine, ein Backofen, ein Kochfeld usw. sein.

Weitere mögliche Implementierungen der Erfindung umfassen auch nicht explizit genannte Kombinationen von zuvor oder im Folgenden bezüglich des Ausführungsbeispiels beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie des im Folgenden beschriebenen Ausführungsbeispiels der Erfindung.

Nachfolgend ist die Erfindung unter Bezugnahme auf die beiliegende Zeichnung und anhand einer speziellen Ausführungsform als Ausführungsbeispiel näher beschrieben. Es zeigen:
- Figur 1: eine schematische Ansicht eines Haushaltsgeräts mit vier Bedienelementen und Ventilen gemäß einem Ausführungsbeispiel;
- Figur 2: eine perspektivische Ansicht des Bedienelements und eines Teils einer Ventilwelle des Ventils gemäß dem Ausführungsbeispiel in auseinandergezogener Darstellung;
- Figur 3: eine weitere perspektivische Ansicht des Bedienelements und eines Teils der Ventilwelle gemäß dem Ausführungsbeispiel in auseinandergezogener Darstellung;
- Figur 4: noch eine weitere perspektivische Ansicht des Bedienelements und eines Teils der Ventilwelle gemäß dem Ausführungsbeispiel in auseinandergezogener Darstellung;
- Figur 5: eine perspektivische Ansicht des Bedienelements und eines Teils der Ventilwelle gemäß dem Ausführungsbeispiel, wenn das Bedienelement an der Ventilwelle montiert ist;
- Figur 6: eine Detailansicht des Bedienelements gemäß dem Ausführungsbeispiel;
- Figur 7: eine Detailansicht des Bedienelements gemäß dem Ausführungsbeispiel, wenn das Bedienelement an der Ventilwelle montiert ist; und
- Figur 8: eine perspektivische Ansicht des Bedienelements und eines Teils einer Welle des Ventils gemäß dem Stand der Technik in auseinandergezogener Darstellung.

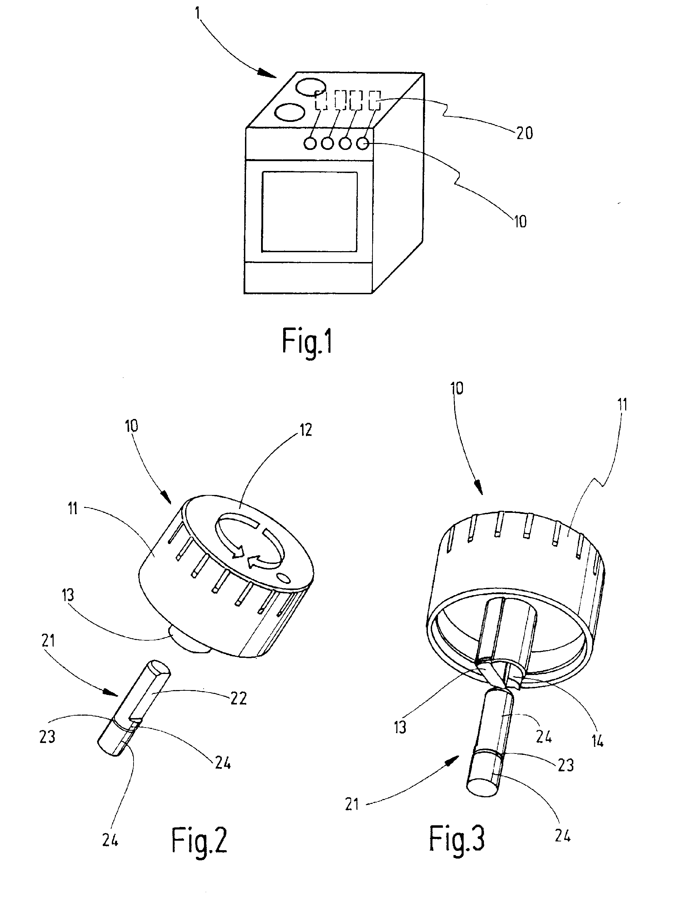

In der Figur 1 ist ein Haushaltsgerät 1, beispielsweise ein Backofen mit Kochfeld, vereinfacht dargestellt. Das Haushaltsgerät 1 hat vier Bedienelemente 10 zum Öffnen/Schließen von vier Ventilen 20. Hierbei ist jedem der Bedienelemente 10 eines der Ventile 20 zugeordnet. Mit den Bedienelementen 10 kann das Haushaltsgerät 1 beispielsweise eingeschaltet/ausgeschaltet werden, oder es kann ein bestimmtes Programm des Haushaltsgeräts 1 ausgewählt werden, oder Ähnliches.

Figur 2 zeigt das Bedienelement 10 und einen Teil einer Ventilwelle 21 des Ventils 20 in auseinandergezogener Darstellung. Das Bedienelement 10 ist in Richtung der Blockpfeile drehbar und hat eine Greiffläche 11, eine Abdeckplatte 12 und einen Stutzen 13. Das Bedienelement 10 hat vorzugsweise eine derartige Größe, dass es von einem Benutzer mit seiner Hand und/oder seinen Fingern an der Greiffläche 11 greifbar ist, so dass das Bedienelement 10 um seine Drehachse bzw. in Richtung der Blockpfeile drehbar ist. Alternativ kann ein Benutzer das Bedienelement 10 auch durch Berühren an der Abdeckplatte 12 drehen. Der Stutzen 13 ist eine Koppeleinrichtung zum Koppeln des Bedienelements 10 mit dem Ventil 20, genauer gesagt mit der Ventilwelle 21.

Das Bedienelement 10 ist in Figur 2 ein an drei Seiten geschlossener Hohlkörper. Die Greiffläche 11 ist hierbei ein zylindrischer Körper, der mittels der kreisrunden Abdeckplatte 12 an einem seiner Enden geschlossen ist. Der Stutzen 13, die Kopplungseinrichtung, ist in der Mitte des Bedienelements 10, und zwar entlang der Zylinderachse des zylindrischen Körpers angeordnet. Auch der Stutzen 13 ist ein Hohlkörper und ragt aus dem Bedienelement 10 auf die von der Abdeckplatte 12 abgewandte Seite heraus.

Die Ventilwelle 21 ist zylinderförmig und hat an ihrem einen Ende, an welchem das Bedienelement 10 montiert werden soll, einen flachen Abschnitt 22. Im Bereich dieses flachen Abschnitts 22 ist die Ventilwelle 21 angefast. Kurz unterhalb des flachen Abschnitts 22 hat die Ventilwelle 21 eine Vertiefung 23, die als Rille rund um den Umfang der Ventilwelle 21 herum ausgebildet ist. Auf beiden Seiten der Vertiefung 23 hat die Ventilwelle 21 einen Abschnitt mit dem vollen Zylinderumfang der Ventilwelle 21.

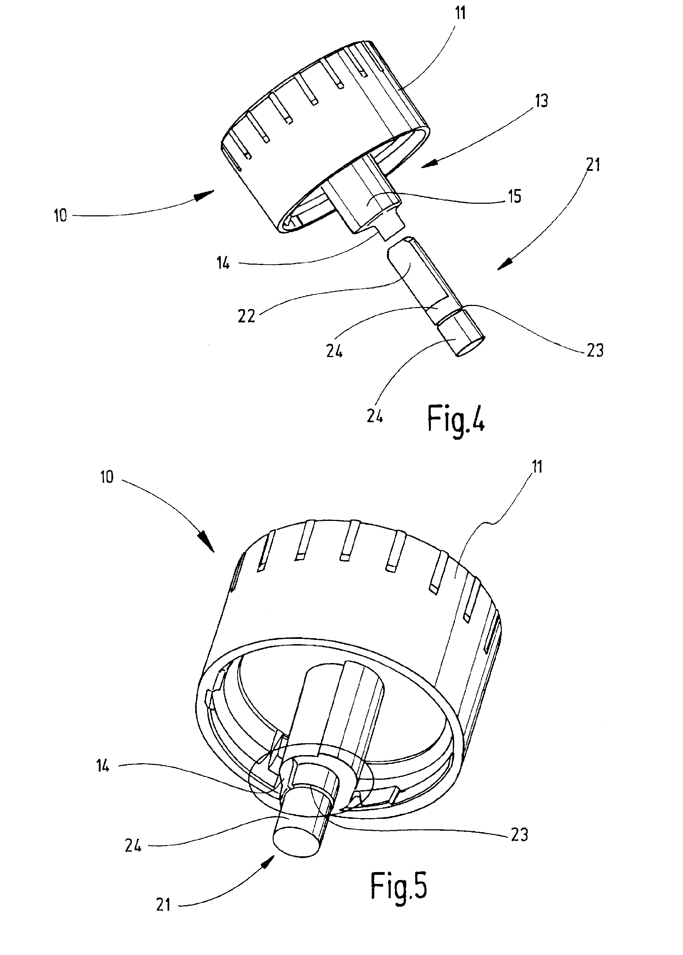

Figur 3 zeigt die Rückseite der in Figur 2 dargestellten Ventilwelle 21 und die Unterseite des Bedienelements 10. Das Bedienelement 10 hat an dem Stutzen 13 einen Vorsprung 14, der von der Unterkante des Stutzens 13 hervorspringt und somit länger als der sonstige rohrförmige Stutzen 13 ist. Der Vorsprung 14 ist in Figur 4 noch besser sichtbar.

Wie in Figur 4 genauer dargestellt, ist der rohrförmige Stutzen 13 an die Form der Ventilwelle 21 angepasst und hat ebenfalls einen flachen Abschnitt 15. Das heißt, der Stutzen 13 ist kein kreisrundes Rohr, sondern der Stutzen 13 ist an einer Seite entlang seiner Länge abgeflacht, wie in Figur 4 dargestellt, während er in anderen Bereichen rund bzw. bogenförmig ist, wie auch aus Figur 2 und 3 ersichtlich. In Figur 4 ist außerdem erkennbar, dass der Vorsprung 14 nicht an dem flachen Abschnitt 15 des Stutzens 13 angeordnet ist, sondern an dem dem flachen Abschnitt 15 gegenüberliegenden Abschnitt des Stutzens 13. Die Länge von flachem Abschnitt 15 des Stutzens 13 und flachem Abschnitt 23 der Ventilwelle 21 ist aufeinander abgestimmt. Zudem ist die Länge des Vorsprungs 14 und des Abstands zwischen flachem Abschnitt 22 der Ventilwelle 21 und ihrer Vertiefung 23 aufeinander abgestimmt. Dadurch kann das Bedienelement 10 an der Ventilwelle 21 und damit dem Ventil 20 auf die in Figur 5 veranschaulichte Weise montiert werden.

In der Figur 5 liegt der flache Abschnitt 23 der Ventilwelle 21 an dem flachen Abschnitt 15 des Stutzens 13 an, wenn das Bedienelement 10 an der Ventilwelle 21 montiert ist. Das heißt, der flache Abschnitt 15 des Bedienelements 10 ist in seiner Form an den flachen Abschnitt 22 angepasst, so dass nur ein sehr geringer Abstand zwischen den beiden flachen Abschnitten 15, 22 vorhanden ist, wenn das Bedienelement 10 an der Ventilwelle 21 montiert ist, wie in Figur 5 gezeigt. Hier ist der Stutzen 13 auf die Ventilwelle 21 derart aufgesteckt, dass der Vorsprung 14 des Stutzens 13 in die Vertiefung 23 der Ventilwelle 21 greift und mit dieser einen Schnappverschluss bildet. Das heißt, wenn das Bedienelement 10 mit dem Stutzen 13 auf die Ventilwelle 21 aufgeschoben wird, schnappt der Vorsprung 14 in die Vertiefung 23 der Ventilwelle 21 ein, sobald das Bedienelement 10 mit dem Stutzen 13 weit genug auf die Ventilwelle 21 aufgeschoben ist. Der Vorsprung 14 ist daher auch als Schnappelement bezeichnet. Die Vertiefung 23 der Ventilwelle 21 ist auch als entsprechendes Element der Ventilwelle 21 bezeichnet, an welches das Schnappelement 14 angepasst ist, um den Schnappverschluss zu bilden.

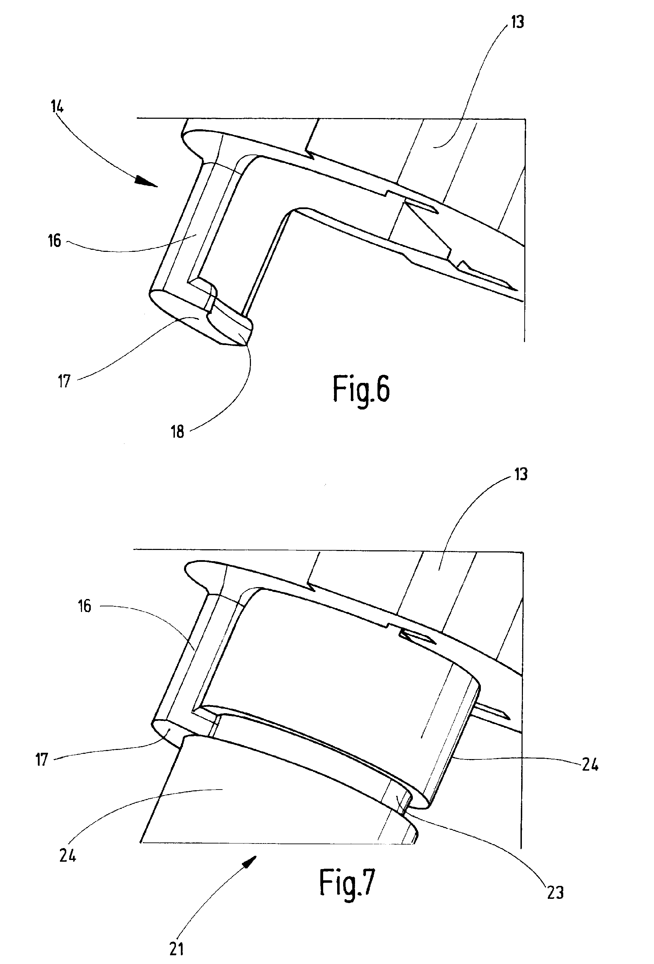

Figur 6 zeigt den unteren Teil des Stutzens 13 des Bedienelements 10 genauer. Der Vorsprung 14 hat einen Zapfen 16, der in Form eines Teils einer Rohrwand ausgeführt ist. Am dem Ende des Zapfens 16, welches Ende von der sonstigen Unterkante des Stutzens 13 abgewandt ist, hat der Zapfen 16 eine Auskragung 17, die in einem der Ventilwelle 21 zuzuwendenden Bereich eine bogenförmige Fläche 18 hat. Der Bogenradius der bogenförmigen Fläche 18 ist an den Radius der Vertiefung 23 der Ventilwelle 21 angepasst. Somit kann die bogenförmige Fläche 18 direkt an der Ventilwelle 21, genauer gesagt der Vertiefung 23 der Ventilwelle 21, anliegen, wenn das Bedienelement 10 an der Ventilwelle 21 montiert ist. Zudem ist der Zapfen 16 so bemessen, dass er mit seinem Ende, das heißt der Auskragung 17, in die Vertiefung 23 der Ventilwelle 21 einschnappt, wenn das Bedienelement 10 mit dem Stutzen 13 weit genug auf die Ventilwelle 21 aufgeschoben ist, wie in Figur 7 veranschaulicht. Dadurch können der Vorsprung 14 und die Vertiefung 23 der Ventilwelle 21 einen Schnappverschluss bilden. Somit kann der Stutzen 13 durch seine spezielle Ausgestaltung mit dem Vorsprung 14 als Zapfen 16 mit Auskragung 17 an seinem Ende zur Kopplung des Bedienelements 10 mit der Ventilwelle 21 dienen.

Soll das Bedienelement 10 wieder von der Ventilwelle 21 demontiert werden, so ist nur der Zapfen 16 so weit von der Ventilwelle 21 wegzubiegen, dass die Auskragung 17 nicht mehr in die Vertiefung 23 der Ventilwelle 21 eingreift. Dann kann das Bedienelement 10 wieder von der Ventilwelle 21 heruntergezogen werden.

Auf diese Weise ist für die lösbare Kopplung von Bedienelement 10 und Ventilwelle 21 keine Feder mehr erforderlich. Dadurch ergeben sich die zuvor erwähnten Vorteile.

Alle zuvor beschriebenen Ausführungsbeispiele können einzeln oder in allen möglichen Kombinationen Verwendung finden. Hierbei sind insbesondere folgende Modifikationen denkbar.

Es sind andere als die dargestellten und beschriebenen Geometrien und Abmessungen für das Bedienelement 10, das Ventil 20 und insbesondere den Vorsprung 14 und die Ventilwelle 21 wählbar, soweit die Gegebenheiten am Einbauort des Haushaltsgeräts 1 zu berücksichtigen sind und ein lösbarer Anbau des Bedienelements 10 an der Ventilwelle 21 möglich ist, wie zuvor beschrieben.

Die Greiffläche 11 und die Abdeckplatte 12 kann eine andere Form haben, als sie in den Figuren als Beispiel gezeigt ist. Zudem kann der Stutzen 13 außen anders geformt sein als gezeigt.

Die Greiffläche 11 und die Abdeckplatte 12 können aus Blech, insbesondere Alu- oder Stahlblech, aus Kunststoff, usw. gefertigt sein. Der Stutzen 13 kann insbesondere ein Kunststoffteil sein.

## Patentansprüche

1. Bedienelement (10) für ein Ventil (20) eines Haushaltsgeräts (1), mit einer Greiffläche (11) zum Greifen des Bedienelements (10) durch einen Benutzer und einer Kopplungseinrichtung (13) zur lösbaren Kopplung des Bedienelements (10) mit einer Ventilwelle (21) des Ventils (20), wobei die Kopplungseinrichtung (13) ein Schnappelement (14) aufweist, welches an ein entsprechendes Element (23) der Ventilwelle (21) angepasst ist, um mit ihm einen Schnappverschluss zu bilden.

2. Bedienelement nach Anspruch 1, **dadurch gekennzeichnet, dass** das Schnappelement ein Vorsprung (14) zum Eingriff in eine Vertiefung (23) der Ventilwelle (21) ist.

3. Bedienelement nach Anspruch 1 oder 2, **dadurch gekennzeichnet, dass** die Greiffläche (11) ein zylindrischer Körper ist, der an einem seiner Enden geschlossen ist, wobei die Kopplungseinrichtung (13) entlang der Zylinderachse des zylindrischen Körpers angeordnet ist.

4. Bedienelement nach Anspruch 1 bis 3, **dadurch gekennzeichnet, dass** die Kopplungseinrichtung (13) ein Hohlkörper mit einem flachen Abschnitt (15) ist, welcher einem flachen Abschnitt (22) der Ventilwelle (21) zugewandt ist, wenn die Kopplungseinrichtung (13) mit der Ventilwelle (21) lösbar gekoppelt ist, wobei das Schnappelement (14) an einer dem flachen Abschnitt (15) der Kopplungseinrichtung (13) gegenüberliegenden Seite des Hohlkörpers angeordnet ist.

5. Bedienelement nach Anspruch 1 bis 4, **dadurch gekennzeichnet, dass** das Schnappelement (14) eine bogenförmige Fläche (18) hat, die an der Ventilwelle (21) anliegt, wenn die Kopplungseinrichtung mit der Ventilwelle (21) lösbar gekoppelt ist.

6. Ventil (20) für ein Haushaltsgeräts (1), mit einer Ventilwelle (21) zum Öffnen und/oder Schließen des Ventils (20), die mit einer Kopplungseinrichtung (13) eines Bedienelements (10) lösbar koppelbar ist, das eine Greiffläche (11) zum Greifen des Bedienelements (10) durch einen Benutzer aufweist, wobei die Ventilwelle (21) ein Element (23) aufweist, welches an ein Schnappelement (14) der Kopplungseinrichtung (13) des Bedienelements (10) angepasst ist, um mit ihm einen Schnappverschluss zu bilden.

7. Ventil nach Anspruch 6, **dadurch gekennzeichnet, dass** das Element eine Vertiefung (23) in der Ventilwelle (21) ist, in die das Schnappelement (14) des Bedienelements (10) eingreifen kann.

8. Ventil nach Anspruch 7, **dadurch gekennzeichnet, dass** die Vertiefung (23) eine um den Umfang der Ventilwelle (21) umlaufende Rille ist.

9. Kombination aus Bedienelement (10) nach einem der Ansprüche 1 bis 5 und einem Ventil (20) nach einem der Ansprüche 6 bis 8, **dadurch gekennzeichnet, dass** das Schnappelement (14) des Bedienelements (10) und das entsprechende Element (23) des Ventils (20) einen Schnappverschluss bilden.

10. Haushaltsgerät (1) mit einem Bedienelement (10) nach einem der Ansprüche 1 bis 5 und einem Ventil (20) nach einem der Ansprüche 6 bis 8, **dadurch gekennzeichnet, dass** das Bedienelement (10) derart mit dem Ventil (20) verbunden ist und an dem Haushaltgerät (1) angeordnet ist, dass ein Benutzer das Bedienelement (10) zum Ein/Ausschalten des Haushaltsgeräts (1) und/oder zum Auswählen eines Programms des Haushaltsgeräts (1) bedienen kann.
